**Europäisches Patentamt**

**European Patent Office**

**Office européen des brevets**

(19)

(11) Veröffentlichungsnummer: **0 103 710**
**B1**

(12)

# EUROPÄISCHE PATENTSCHRIFT

(45) Veröffentlichungstag der Patentschrift:
**23.04.86**

(51) Int. Cl.⁴: **F 16 K 3/08, F 16 K 47/02**

(21) Anmeldenummer: **83107489.3**

(22) Anmeldetag: **29.07.83**

(54) Oberteilkartusche für ein sanitäres Einzel-Absperrventil.

(30) Priorität: **18.09.82 DE 3234643**

(43) Veröffentlichungstag der Anmeldung:
**28.03.84 Patentblatt 84/13**

(45) Bekanntmachung des Hinweises auf die Patenterteilung:
**23.04.86 Patentblatt 86/17**

(84) Benannte Vertragsstaaten:
**AT BE CH DE FR GB IT LI LU NL SE**

(56) Entgegenhaltungen:
**EP - B - 0 003 459**
**EP - B - 0 033 428**
**CH - A - 616 219**
**DE - A - 2 944 520**
**FR - A - 2 485 147**

(73) Patentinhaber: **IDEAL-STANDARD GMBH, Euskirchener Strasse 80, D-5300 Bonn 1 (DE)**

(72) Erfinder: **Vogel, Dieter, Danziger Strasse 99, D-5560 Wittlich (DE)**
Erfinder: **Nikolayczik, Hans, Moselweinstrasse 35, D-5561 Minheim (DE)**

## Beschreibung

Die Erfindung betrifft eine Oberteilkartusche für ein sanitäres Einzel-Absperrventil, nach dem Oberbegriff des Anspruchs 1.

Aus der EP-A-33 428 ist ein derartiger Gegenstand bekannt. Dabei ist nachteilig, dass die Spindel nicht nach oben abgedichtet ist und ferner trocken läuft, wobei ein Schwergang der Spindel entsteht. Weiterhin ist nachteilig, dass diese Einrichtung im uneingeschraubten Zustand nicht sicher zusammengehalten wird und daher auseinander fallen kann.

Die Aufgabe der Erfindung bestand darin, die vorstehend genannten Nachteile bei einer derartigen Einrichtung zu beseitigen.

Diese Aufgabe wird erfindungsgemäss durch die Ausbildung nach dem kennzeichnenden Teil des Patentanspruches 1 gelöst.

Die Vorteile der Erfindung bestehen darin, dass das Stirnlager der Spindel in einer Fettkammer gelagert ist und diese ganz geschlossen, und daher auch gegen das Eindringen von Putzmitteln oder dgl. von oben abgesichert ist. Ferner ist ein Grobfilter zur Absonderung von Grobverschmutzung im unteren Bereich des Kopfstückes angeordnet, der zusammen mit einem Stützring den Dichtring und dadurch alle Bauteile in ihrer Lage haltert und gegen Herausfallen sichert.

Die Fettkammer ist auf einfache Weise durch 2 O-Ringe gebildet und gleichzeitig verschlossen; hierdurch wird ein Verkalken und das Eindringen von Putzmitteln von oben verhindert und ferner das Stirnlager dauernd in Fett gehalten; dadurch kann dieses nicht mehr trockenlaufen.

Ein Gewebeeinsatz zur Geräuschedämpfung ist vorteilhafterweise auf der beweglichen Dichtscheibe angeordnet und mit Sieb-Abwicklungen versehen, die senkrecht in Wasserdurchtritts ausschnitte der beweglichen Scheibe eintauchen. Dabei wird der Gewebeeinsatz mit einem Buckel in einer Bohrung der Spindel zentriert; dabei liegt der Gewebeeinsatz mit einer Aussparung auf einen Mittelsteg der beweglichen Dichtscheibe auf.

Der Dichtring ist an seinen Stirnflächen zwecks vorteilhafter Anlage an die drehfesten Dichtscheibe mit wabenförmigen Dichtlippen versehen.

Die Abwinklungen am Gewebeeinsatz sind zweckmässigerweise so breit ausgeführt, dass sie sich unten auf den Rand der drehfesten Dichtscheibe aufstützen können, so dass auch bei ungünstigster Toleranz ein Blockieren der Scheiben ausscheidet.

Es hat sich ferner als vorteilhaft gezeigt, dass die bewegliche Dichtscheibe im äusseren Bereich mit Ausnehmungen, für eine Aufnahme der Mitnehmer der Spindel, ausgestattet ist.

Die Wasserdurchtrittsöffnungen der drehfesten Dichtscheibe sind zweckmässigerweise mit Abschrägungen ausgestattet.

Dadurch, dass die Spindel die bewegliche Dichtscheibe direkt aufnimmt, werden die Gesamttoleranzen ganz entschieden verringert.

Die Erfindung wird nachfolgend anhand der ein Ausführungsbeispiel darstellenden Zeichnungen näher erläutert:

Darin zeigen:

Fig. 1 eine zusammengebaute, teilweise geschnitten dargestellte Seitenansicht der erfindungsgemässen Oberteilkartusche für ein sanitäres Einzel-Absperrventil,

Fig. 2 eine bewegliche Dichtscheibe gemäss der Erfindung in einer Ansicht von oben,

Fig. 3 eine drehfeste Dichtscheibe gemäss der Erfindung ebenfalls in einer Ansicht von unten,

Fig. 4 die bewegliche Dichtscheibe mit einem Gewebeeinsatz in einer Ansicht von unten,

Fig. 5 eine teilweise im Schnitt dargestellte Seitenansicht 1 - der erfindungsgemässen Oberteilkartusche,

Fig. 6 einen Ausschnitt der Oberteilkartusche in einer teilweise angedeuteten Seitenansicht,

Fig. 7 einen Dichtring aus der Oberteilkartusche im Schnitt in einer Seitenansicht,

Fig. 8 einen Ausschnitt aus dem Dichtring gemäss der Fig. 7

Fig. 9 einen Grobfilter in einer Draufsicht.

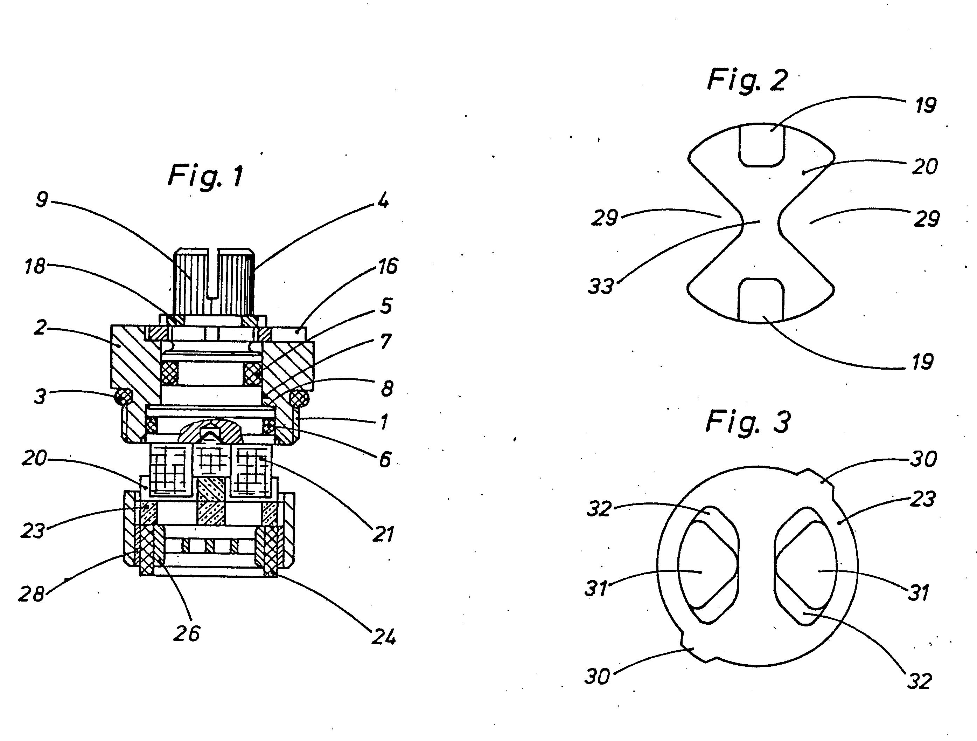

In Fig. 1 ist eine zusammengebaute, geschnitten dargestellte Oberteilkartusche für ein sanitäres Einzel-Absperrventil in einem Zustand gezeigt, in dem es mittels einem Gewinde 1 an einem Kopfstück 2 in einer nicht gezeigten Gewindeöffnung montiert und dabei durch einen O-Ring 3 abgedichtet werden kann. In dem Kopfstück 2 befindet sich eine Spindel 4; diese ist wiederum dem Kopfstück 2 gegenüber durch O-Ringe 5 und 6 abgedichtet. Durch die vorgesehene Anordnung dieser O-Ringe 5 und 6 wird eine Fettkammer 7 gebildet, in der die Spindel 4 sowie ein Stirnlager 8 dauernd in Fett gelagert sind.

Die Spindel 4 trägt am Kopfende eine Feinverzahnung 9; mittels dieser ist ein Ausrichten eines nicht gezeigten Griffes auf eine bestimmte Stellung möglich; dadurch ist ferner aus der Hebel-Stellung der Öffnungsgrad ersichtlich.

Ferner befindet sich auf der Spindel 4 ein Anschlagstück 16; dieses gestattet durch Versetzen auf der Spindel 4 ein Drehen, entweder nach rechts oder nach links. Durch einen Sicherungsclip 18 ist die Spindel 4 in dem Kopfstück 2 gegen Herausfallen gesichert.

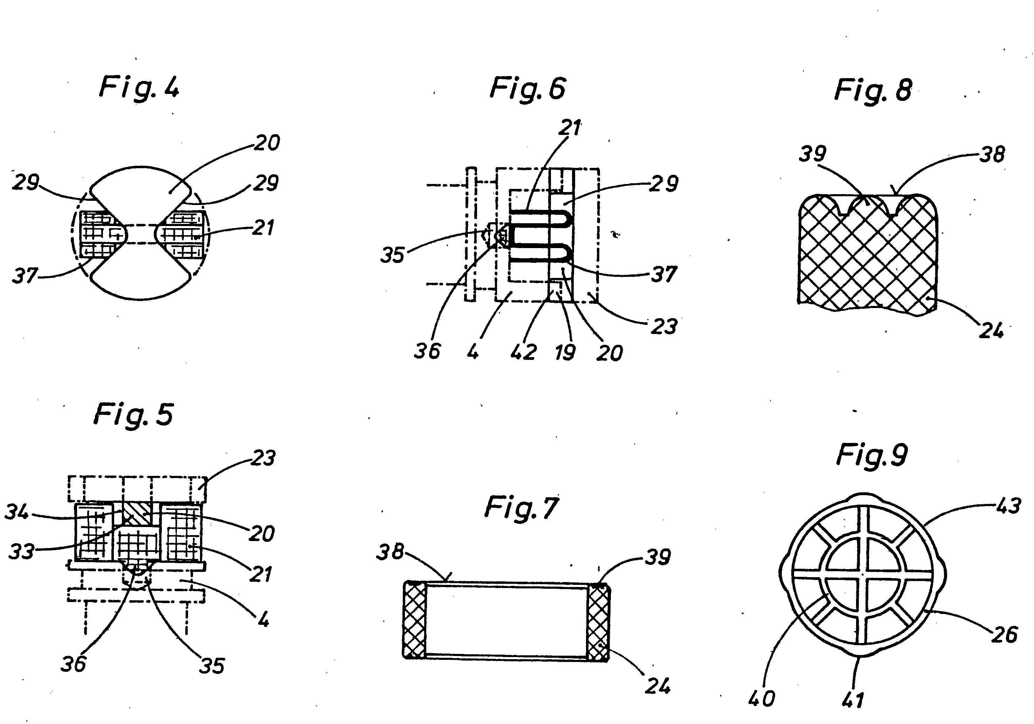

Die Spindel 4 ist am unteren Ende mit Mitnehmern 42 ausgestattet, wie in Fig. 6 erkennbar, die in Ausnehmungen 19 (Fig. 2) einer beweglichen Dichtscheibe 20 greifen. Auf der beweglichen Dichtscheibe 20 befindet sich ein Gewebeeinsatz 21 auf den in den Beschreibungen zu den Fig. 4 bis 10 noch näher eingegangen wird. Im unteren Bereich des Kopfstücks 2 befindet sich eine drehfeste Dichtscheibe 23; diese wird nach dem Einschrauben durch einen Dichtring 24 in Anlage an die bewegliche Dichtscheibe 20 gehalten.

Der Dichtring 24 wird von innen durch einen Grobfilter 26 und von aussen durch einen eingepressten Stützring 28 gestützt; durch das Einpressen des Stützringes 28 ergibt sich eine saubere Dichtflächenauflage, und ferner wird dadurch ein Herausfallen der Dichtscheiben 20 und 23 bei Transport und Gegendruck verhindert, z.B. auch bei Druckdifferenz zwischen warmem und kaltem Wasser, wenn eine Einrichtung nach der Erfindung bei Mischbatterien verwandt wird.

Wie Fig. 2 zeigt, ist die bewegliche Dichtscheibe 20

2

mit einer Ausnehmung 19 für die Mitnehmer 42, siehe Fig. 6, und Ausschnitten 29 für den Wasserdurchlass ausgestattet.

Wie in Fig. 3 erkennbar, ist die gezeigte drehfeste Dichtscheibe 23 am äusseren Umfang mit Erhebungen 30, um ein Verdrehen zu verhindern, versehen. In der drehfesten Dichtscheibe 23 sind Wasserdurchtrittsöffnungen 31 vorgesehen; diese sind mit Abschrägungen 32 ausgestattet.

In Fig. 4 ist die bewegliche Dichtscheibe 20 in einer Unteransicht gezeigt; in der beweglichen Dichtscheibe befinden sich in den Ausschnitten 29 Abwinklungen 22 des Gewebeeinsatzes 21.

Bei der Darstellung in Fig. 5 ist die drehfeste Dichtscheibe 23 angedeutet; auf einem Mittelsteg 33 der Dichtscheibe (20) ist der Gewebeeinsatz 21 erkennbar. Der Gewebeeinsatz 21 ist mit einer Aussparung 34 versehen; diese dient zur Dreh-Befestigung und Auflage auf den Mittel-Steg 33 der beweglichen Dichtscheibe 20. Die angedeutete Spindel 4 ist mit einer Bohrung 35 ausgestattet; in dieser ist der Gewebeeinsatz 21 durch einen Buckel 36 zentriert und gehaltert.

Die Darstellung in Fig. 6 zeigt einen Ausschnitt aus der Fig. 1 in einer Seitenansicht; dabei ist die Spindel 4 angedeutet und erkennbar, dass diese mit Mitnehmern 42 in die Ausnehmungen 19 der beweglichen Dichtscheibe 20 greift. In der Spindel 4 ist der Gewebeeinsatz 21 mit seinem Buckel 36 in der Bohrung 35 zentriert. Der Gewebeeinsatz 21 ragt mit Siebabwinkelungen 37 in die Ausschnitte 29 der beweglichen Dichtscheibe 20; diese befindet sich in Anlage mit einer drehfesten Dichtscheibe 23.

In Fig. 7 ist der Dichtring 24 im Schnitt gezeigt; dieser ist an seinen Stirnseiten 38 mit Dichtlippen 39 ausgestaltet wie in Fig. 8 im Detail gezeigt; durch diese Dichtlippen erfolgt eine bessere Anpassung des Dichtringes an die drehfeste Dichtscheibe 23.

Die Fig. 9 zeigt den Grobfilter 26 in einer Draufsicht; der Grobfilter ist zur Verhinderung vom Vordringen grosser Partikel bis zu den Dichtscheiben, mit einem Grobfilternetz 40 versehen. Der Grobfilter 26 ist aussen mit leichten Erhebungen 41 ausgestattet; durch diese Erhebungen 41 wird eine gute Haftung erzielt. Der Raum 43 stellt einen Freiraum dar; in diesen kann der Dichtring 24 ausweichen, wenn ein Materialverdrängen in Längsrichtung nicht mehr möglich ist.

### Patentansprüche

1. Oberteilkartusche für ein sanitäres Einzel-Absperrventil, bestehend aus einem Kopfstück (2), welches in eine Normöffnung einschraubbar und mittels eines O-Ringes (3) abdichtbar ist, einer mit einem Stirnlager (8) versehenen Spindel (4), einer beweglichen, durch die Spindel angetriebenen Dichtscheibe (20), einer drehfest angeordneten Dichtscheibe (23), und einem im unteren Teil des Kopfstückes angeordneten Dichtring (24), der beim Festschrauben des Kopfstückes die Dichtflächen der Dichtscheiben gegeneinander drückt, wobei die Dichtscheiben mit Wasserdurchtrittsöffnungen (29, 31) versehen und durch die Einstellung einer entsprechenden Winkelposition der Wasserdurchgang bestimmbar ist, dadurch gekennzeichnet, dass

a) das Stirnlager (8) der Spindel (4) in einer geschlossenen Fettkammer (7) gelagert ist,

b) der Dichtring (24) zwischen einem Grobfilter (26) und einem Stützring (28) gehalten und im Kopfstück fest angeordnet ist.

2. Oberteilkartusche nach Anspruch 1, dadurch gekennzeichnet, dass die Fettkammer (7) durch O-Ringe (5 und 6) gebildet und verschlossen ist.

3. Oberteilkartusche nach den Ansprüchen 1 und 2, dadurch gekennzeichnet, dass ein Gewebeeinsatz (21) auf der beweglichen Dichtscheibe (20) angeordnet ist, und dieser mit Sieb-Abwinklungen (37) senkrecht in Wasserdurchtrittsausschnitte (29) der beweglichen Dichtscheibe (20) eintaucht, und dass der Gewebeeinsatz mit einem Buckel (36), durch den der Gewebeeinsatz (21) in einer Bohrung (35) der Spindel (4) zentriert wird, ausgestattet ist und dabei mittels einer vorgesehenen Aussparung (34) auf einem Mittelsteg (33) der beweglichen Dichtscheibe (20) aufliegt.

4. Oberteilkartusche nach Anspruch 1, dadurch gekennzeichnet, dass der Dichtring (24) an seinen Stirnseiten (38) mit wabenförmigen Dichtlippen (39) versehen ist.

5. Oberteilkartusche nach den Ansprüchen 1 und 3, dadurch gekennzeichnet, dass die bewegliche Dichtscheibe (20) mit Ausnehmungen (19) versehen ist, in die Mitnehmer (42) der Spindel (4) greifen.

6. Oberteilkartusche nach den Ansprüchen 1, 3 und 5, dadurch gekennzeichnet, dass die Wasserdurchtrittsöffnungen (31) der drehfesten Dichtscheibe (23) mit Abschrägungen (32), zwecks günstiger Anströmung des Wassers, ausgestattet sind, und dass die drehfeste Dichtscheibe (23) am Umfang Erhebungen (30) zur Verdrehsicherung aufweist.

7. Oberteilkartusche nach den Ansprüchen 1, 3, 5 und 6, dadurch gekennzeichnet, dass die Sieb-Abwinklungen (37) des Gewebeeinsatzes (21) so breit ausgeführt sind, dass sie sich unten auf dem Rand der drehfesten Dichtscheibe (23) aufstützen.

### Claims

1. Upper cartridge part for a sanitary single shutoff valve, comprising a head piece (2) which can be screwed into a standard aperture and can be sealed by means of an O-ring (3), a spindle (4) provided with an end journal bearing (8), a movable sealing disc (20) driven by the spindle, a fixedly arranged sealing disc (23), and a seal (24), arranged in the lower part of the head piece, which presses the sealing surfaces of the sealing discs against each other when the head piece is tightened, whereby the sealing discs are provided with water apertures (29, 31), and by adjustment of an appropriate angular position the water passage can be determined, characterised in that

a) the end journal bearing (8) of the spindle (4) is mounted in a closed grease chamber (7),

b) the sealing ring (24) is retained between a coarse filter (26) and a thrust ring (28) and is fixedly arranged in the head piece.

2. Upper cartridge part according to claim 1, characterised in that the grease chamber (7) is formed and sealed by O-rings (5 and 6).

3. Upper cartridge part according to claims 1 and 2, characterised in that a mesh insert (21) is arranged on the movable sealing disc (20), and this dips with sieve projections (37) vertically into water passage apertures (29) of the movable sealing disc (20), and in that the mesh insert is provided with a hump (36), through which the mesh insert (21) is centered in a bore (35) of the spindle (4), and hence by means of a provided recess (34) it rests on a centre crosspiece (33) of the movable sealing disc (20).

4. Upper cartridge part according to claim 1, characterised in that the sealing ring (24) is provided on its front surfaces (38) with honeycombed sealing lips (39).

5. Upper cartridge part according to claims 1 and 3, characterised in that the movable sealing disc (20) is provided with recesses (19) into which cams (42) of the spindle (4) engage.

6. Upper cartridge part according to claims 1, 3 and 5, characterised in that the water throughflow apertures (31) of the fixed sealing disc (23) are provided with inclines (32) for a more favourable flow of the water, and in that the fixed sealing disc (23) has elevations (30) on the circumference for securing against torsion.

7. Upper cartridge part according to claims 1, 3, 5 and 6, characterised in that the sieve projections (37) of the mesh insert (21) are made to be so wide that they rest at the bottom on the edge of the fixed sealing disc (23).


**Revendications**

1. Partie supérieure en cartouche d'un robinet d'arrêt unique pour un appareil sanitaire, comportant une tête (2) adaptée à se visser dans une ouverture normalisée et garnie d'un joint torique d'étanchéité (3), un pivot (4) qui présente un portage frontal (8), une rondelle d'obturation mobile (20) entraînée en rotation par le pivot (4), une rondelle d'obturation fixe (23), et une bague d'étanchéité (24) disposée à la base de la tête, et servant à mettre en appui l'une contre l'autre les faces d'étanchéité des deux rondelles d'obturation lorsqu'on visse la partie supérieure précitée sur le corps du robinet correspondant; les deux rondelles d'obturation étant pourvues d'ouvertures (29, 31) pour le passage de l'eau, et le débit de l'eau étant déterminé par la position angulaire relative des deux rondelles d'obturation; ladite partie supérieure du robinet étant caractérisé en ce que:
a) le portage frontal (8) du pivot (4) est disposé dans une chambre de graissage fermée (7);
b) la bague d'étanchéité (24) est montée à poste fixe dans la tête, entre un filtre primaire (26) à grosses mailles, et une bague de maintien (28).

2. Partie supérieure en cartouche d'un robinet selon la revendication 1, caractérisé en ce que la chambre de graissage (7) est définie par des joints toriques (5 et 6), et obturée par ceux-ci.

3. Partie supérieure en cartouche d'un robinet selon les revendications 1 et 2, caractérisé en ce qu'elle comporte une garniture tissée (21), montée sur la rondelle d'obturation mobile (20) et présentant des plis de filtrage (37) qui pénètrent perpendiculairement en saillie dans des échancrures (29) prévues dans la rondelle d'obturation mobile (20) pour le passage de l'eau; et en ce que la garniture tissée est pourvue d'un bossage (36) adapté à s'engager dans un trou (35) ménagé dans le pivot (4) pour centrer la garniture tissée (21); celle-ci comportant un évidement (34), qui permet le montage de la garniture tissée (4) en appui sur une barrette médiane (33) de la rondelle d'obturation mobile (20).

4. Partie supérieure en cartouche de robinet selon la revendication 1, caractérisé en ce que la bague d'étanchéité (24) comporte sur ses faces frontales (38) des lèvres d'étanchéité (39) profilées en alvéoles.

5. Partie supérieure en cartouche de robinet selon les revendications 1 et 3, caractérisé en ce que la rondelle d'obturation mobile (20) est pourvue d'évidements (19) adaptés à recevoir des doigts d'entraînement (42) du pivot (4).

6. Partie supérieure en cartouche de robinet selon les revendications 1, 3 et 5, caractérisé en ce que les ouvertures (31) ménagées pour le passage de l'eau dans la rondelle d'obturation fixe (23) comportent des bords de profil biseauté (32), pour faciliter l'écoulement de l'eau; et en ce que la rondelle d'obturation fixe (23) comporte en périphérie des bossages en saillie (30), pour immobiliser cette rondelle en rotation.

7. Partie supérieure en cartouche d'un robinet selon les revendications 1, 3, 5 et 6, caractérisé en ce que les plis de filtrage (37) de la garniture tissée (21) sont confectionnés avec une largeur suffisante pour prendre appui vers le bas sur la bordure de la rondelle d'obturation fixe (23).

Fig. 1

Fig. 2

Fig. 3

Fig. 4

Fig. 6

Fig. 8

Fig. 5

Fig. 7

Fig. 9

0 103 710